# EUROPÄISCHE PATENTSCHRIFT

(11) **EP 3 064 085 B1**
(45) Veröffentlichungstag und Bekanntmachung des Hinweises auf die Patenterteilung: **31.01.2018**
(21) Anmeldenummer: 16000497.4
(22) Anmeldetag: 02.03.2016
(51) Int. Cl.: A45F 3/04, B25F 5/00

(54) **RÜCKENTRAGBARES SYSTEMMODUL MIT EINER TRAGVORRICHTUNG UND ABKLAPPBAREM HÜFTABSCHNITT**
SYSTEM MODULE WHICH CAN BE WORN ON THE BACK WITH A CARRIER DEVICE AND FOLDING HIP SECTION
SYSTEME MODULAIRE POUVANT ETRE PORTE SUR LE DOS COMPRENANT UN DISPOSITIF DE SUPPORT ET UNE SECTION DE CEINTURE RABATTABLE

(30) Priorität: 04.03.2015 DE 102015002724
(43) Veröffentlichungstag der Anmeldung: 07.09.2016
(73) Patentinhaber: Andreas Stihl AG & Co. KG, 71336 Waiblingen (DE)
(72) Erfinder: Wagner, Daniel, D-73650 Winterbach (DE); Behringer, Patrick, D-73760 Ostfildern (DE); Zeller, Markus, D-73527 Schwäbisch Gmünd (DE); Lambe, Martin, D-71394 Kernen i. R. (DE)
(74) Vertreter: Wasmuth, Rolf

(56) Entgegenhaltungen:
- EP-A1- 1 769 699
- DE-A1- 19 608 794
- DE-A1-102010 038 699
- FR-A1- 2 984 700
- US-A1- 2014 011 061

## Beschreibung

Die Erfindung betrifft ein rückengetragenes Systemmodul für ein Arbeitswerkzeug mit einer Standfläche zum aufrechten Abstellen des Systemmoduls nach dem Oberbegriff des Anspruchs 1.

Aus der DE 10 2011 122 057 A1 ist ein rückengetragenes Systemmodul bekannt. Dieses bekannte Systemmodul ist als Akkupack mit einem Akkupackgehäuse ausgebildet und stellt die Energieversorgung eines elektrischen Arbeitswerkzeugs bereit, welches über eine Anschlussleitung an den Akkupack angeschlossen ist. Im Akkupackgehäuse sind wiederaufladbare Akkuzellen aufgenommen, wobei das Akkupackgehäuse einen Boden mit einer Standfläche aufweist. Die Standfläche des Akkupackgehäuses bildet allgemein eine Standfläche des rückengetragenen Systemmoduls, mit der das Systemmodul aufrecht auf dem Boden abgestellt werden kann. Die Tragvorrichtung für das Systemmodul weist zumindest eine Rückenplatte und zwei Schultergurte auf, wobei die Rückenplatte mit einem oberen Schulterabschnitt und mit einem unteren Rückenabschnitt ausgebildet ist. Ein an der Tragvorrichtung vorgesehener Schultergurt ist mit einem oberen Ende im oberen Schulterabschnitt der Rückenplatte und mit einem unteren Ende im Bereich des unteren Rückenabschnitts der Rückenplatte festgelegt.

In der US 2014/011061 A1 ist ein rückengetragenes Systemmodul mit einer Rückenplatte beschrieben, die einen oberen Schulterabschnitt und einen unteren Rückenabschnitt zeigt. An der Rückenplatte ist ein Hüftgurt angebunden, der in Höhe des unteren Endes des Rückenabschnitts endet. Das Gehäuse hat eine derartige Erstreckung, dass das untere Ende des Gehäuses mit dem unteren Ende des Rückenabschnitts zusammenfällt.

Die DE 10 2010 038 699 A1 offenbart eine Tragvorrichtung für ein Systemmodul, das einen um eine Schwenkachse verschwenkbaren Hüftgurt zeigt. Der Hüftgurt ist um eine Bewegungsachse relativ zum Rückenabschnitt der Tragplatte schwenkbar, wobei sich die Bewegungsachse im Bereich der Standfläche des Systemmoduls erstreckt. Ein Abstellen auf einer Bodenfläche des rückengetragenen Systemmoduls ist durch den Hüftgurt behindert, so dass das Systemmodul nicht aufrecht auf dem Boden abgestellt werden kann.

Der Erfindung liegt die Aufgabe zugrunde, einen rückengetragenes Systemmodul derart weiterzubilden, dass einerseits ein gleichmäßiger Lastabtrag auf den Rücken eines Benutzers erzielt ist und andererseits das Systemmodul zusammen mit seiner Tragvorrichtung über seine Standfläche in aufrechter Stellung sicher auf dem Boden abzustellen ist.

Die Aufgabe wird erfindungsgemäß nach den Merkmalen des Anspruchs 1 gelöst.

Die Rückenplatte ist über den Rückenabschnitt hinaus um einen Hüftabschnitt verlängert, so dass die Tragkräfte auch über dem Hüftabschnitt auf die Hüften eines Benutzers abgetragen werden können. Es ist eine gute Lastverteilung des Gewichts des Systemmoduls auf den Rücken eines Benutzers gegeben. Darüber hinaus gewährleistet der Hüftabschnitt eine weitere Fixierung des Systemmoduls auf dem Rücken eines Benutzers, ohne die Bewegungsfreiheit des Benutzers einzuschränken.

Der als Verlängerung am Rückenabschnitt vorgesehene Hüftabschnitt ist um eine Bewegungsachse relativ zum Rückenabschnitt schwenkbar, wobei sich die Bewegungsachse zwischen dem Rückenabschnitt und dem Hüftabschnitt im Bereich der Höhe der Standfläche des Systemmoduls erstreckt. Die bewegliche Anbindung des Hüftabschnittes an den Rückenabschnitt hat den Vorteil, dass der Hüftabschnitt abgeklappt werden kann. Dies ist immer dann von Vorteil, wenn das Systemmodul auf seiner Standfläche aufrecht auf eine Bank, dem Boden oder einer anderen ebenen Fläche abzustellen ist. Der Hüftabschnitt behindert das aufrechte Abstellen des Systemmoduls zusammen mit der Tragvorrichtung nicht.

Bevorzugt verläuft die Bewegungsachse parallel zur Ebene der Standfläche. Zweckmäßig wird die Bewegungsachse vom Systemmodul selbst überdeckt. Dadurch wird erreicht, dass eine Bewegung des Hüftabschnitts um die Bewegungsachse im Wesentlichen nur in eine Schwenkrichtung möglich ist. In Richtung zum Systemmodul ist ein Abklappen des Hüftabschnitts nur beschränkt möglich, da der Hüftabschnitt durch die Überdeckung des Systemmoduls von diesem abgestützt wird. In die Gegenrichtung ist ein Umklappen des Hüftabschnittes vom Systemmodul weg mit großem Schwenkwinkel möglich, wobei aufgrund der Überdeckung der Bewegungsachse durch das Systemmodul der abgeklappte Hüftabschnitt etwas höher als die Standfläche liegt. Der Hüftabschnitt kann so um die Bewegungsachse über die Ebene der Standfläche hinaus um bis zu 90° und mehr verschwenkt werden, wobei in der Tragstellung der Hüftabschnitt über die Standfläche des Systemmoduls hinausragt und der Hüftabschnitt in einer Schwenkstellung oberhalb der Ebene der Standfläche des Systemmoduls liegt.

In bevorzugter Ausführungsform wird die Bewegungsachse durch ein Textilscharnier, zweckmäßig durch ein elastisches Gewebe gebildet.

Der Hüftabschnitt ist mit einem Hüftgurt zu schließen, so dass der Hüftabschnitt fest auf der Hüfte des Benutzers zu fixieren ist.

Es kann vorteilhaft sein, das Systemmodul gegen Feuchtigkeit und Schmutz zu schützen. Dies ist z. B. dann zweckmäßig, wenn das Systemmodul durch einen Akkupack gebildet ist. Zweckmäßig ist eine Abdeckhaube vorgesehen, die an der Rückenplatte befestigt sein kann. Die Abdeckhaube ist vorteilhaft am unteren, dem Hüftabschnitt benachbarten Ende offen; im offenen Ende der Abdeckhaube liegt die Standfläche des Systemmoduls, so dass die Abdeckhaube das aufrechte Abstellen des Systemmoduls nicht behindert und vorteilhaft darüber hinaus die Abdeckhaube nicht durch Bodenkontakt beschädigt werden kann.

Vorteilhaft besteht die Abdeckhaube aus einem wasserabweisenden, flexiblen Material. Um das Eindringen von Feuchtigkeit wie Regenwasser unter die Abdeckhaube zu verhindern, wird die Abdeckhaube über einen lösbaren, wasserabweisenden Verschluss an der Rückenplatte befestigt.

Weitere Merkmale der Erfindung ergeben sich aus den weiteren Ansprüchen, der Beschreibung der Zeichnung, in der ein nachstehend im Einzelnen beschriebenes Ausführungsbeispiel der Erfindung dargestellt ist. Es zeigen:
- Fig. 1: in perspektivischer Darstellung ein Systemmodul in Form eines Akkupacks mit einer Tragvorrichtung zum Tragen auf dem Rücken eines nicht dargestellten Benutzers,
- Fig. 2: eine Seitenansicht auf das Systemmodul mit der Tragvorrichtung,
- Fig. 3: eine Seitenansicht auf das Systemmodul mit Tragvorrichtung nach Fig. 2 mit in Tragstellung dargestelltem Hüftabschnitt und strichliert angedeutet eingeschwenktem Hüftabschnitt,
- Fig. 4: eine Seitenansicht auf ein auf dem Boden abgestelltes Systemmodul mit eingeschwenktem Hüftabschnitt,
- Fig. 5: eine schematische Seitenansicht auf ein Systemmodul in Form einer Antriebseinheit eines Blasgerätes,
- Fig. 6: eine schematische Seitenansicht auf ein Systemmodul nach Fig. 5 mit einer durch Standfüße bestimmten Standfläche.

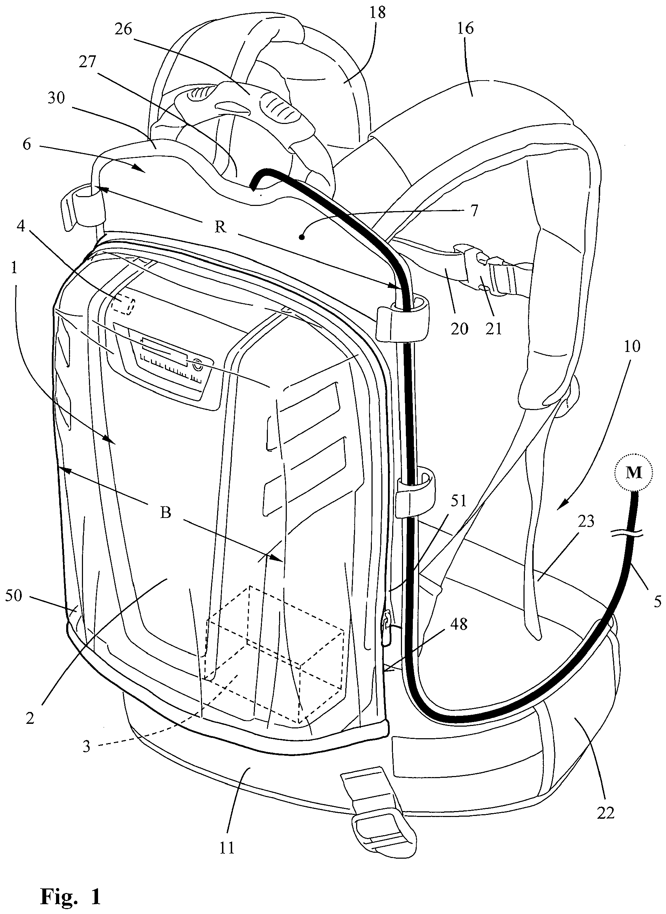

Das im Ausführungsbeispiel nach den Figuren 1 bis 4 dargestellte rückengetragene Systemmodul 1 ist als Akkupack mit einem Akkupackgehäuse 2 ausgebildet, in dem - wie strichliert angedeutet - eine Anordnung von wiederaufladbaren Akkuzellen 3 vorgesehen ist. Die Anordnung der Akkuzellen 3 hat in einem Anschlusskasten einen gemeinsamen elektrischen Anschluss 4, an dem eine Leitung 5 zu einem äußeren elektrischen Verbraucher M angeschlossen ist. Die Leitung 5 kann, wie in Fig. 1 gezeigt, längs des Außenrandes 30 der Tragvorrichtung geführt sein, wobei sie zweckmäßig über Befestigungsmittel 35 am Außenrand 30 fixiert ist. Das Systemmodul 1 ist im Ausführungsbeispiel mit der Rückenplatte 6 einer Tragvorrichtung 10 fest verbunden; es kann zweckmäßig sein, die Rückenplatte 6 einteilig mit dem Systemmodul 1 auszubilden.

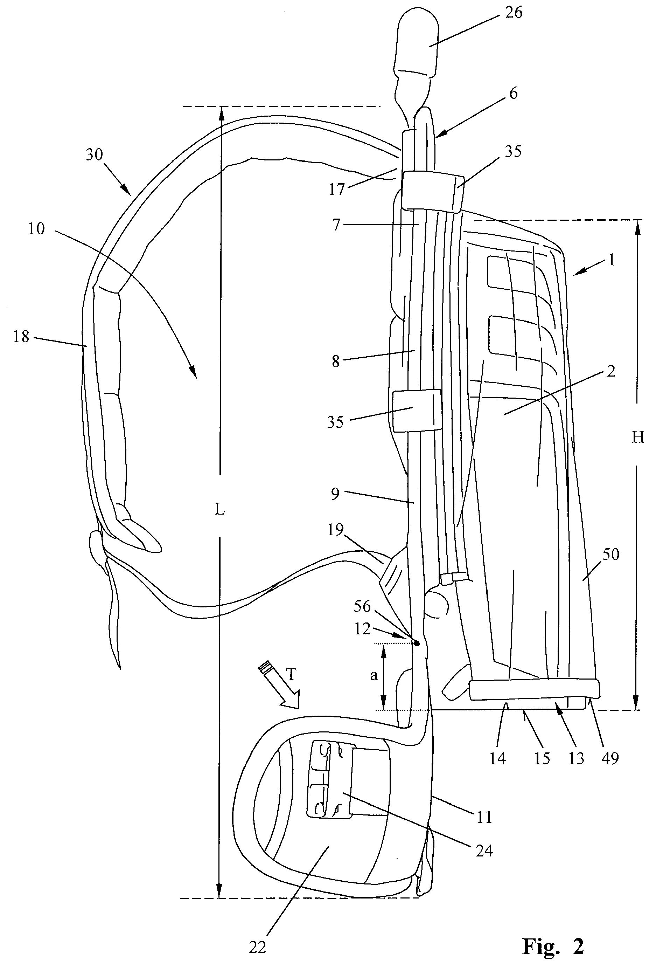

Wie Fig. 2 zeigt, erstreckt sich die Rückenplatte 6 in Hochrichtung von einem oberen Schulterabschnitt 7 über einen Mittelabschnitt 8 zu einem unteren Rückenabschnitt 9. Wie ferner in den Figuren 1 bis 5 dargestellt, ist im Ausführungsbeispiel die Rückenplatte 6 über den Rückenabschnitt 9 hinaus mit einem Hüftabschnitt 11 verlängert. Der Hüftabschnitt 11 schließt zweckmäßig über ein Textilscharnier, vorzugsweise über einen elastischen Gewebeabschnitt 12 an den Rückenabschnitt 9 an, so dass der Hüftabschnitt 11 relativ zur Rückenplatte 6 bzw. dessen Rückenabschnitt 9 um eine Bewegungsachse 56 beweglich ist. Die schwenkbare Anbindung des Hüftabschnitts 11 an den Rückenabschnitt 9 kann auch in anderer Weise erfolgen, z. B. durch ein Gelenk oder dgl.

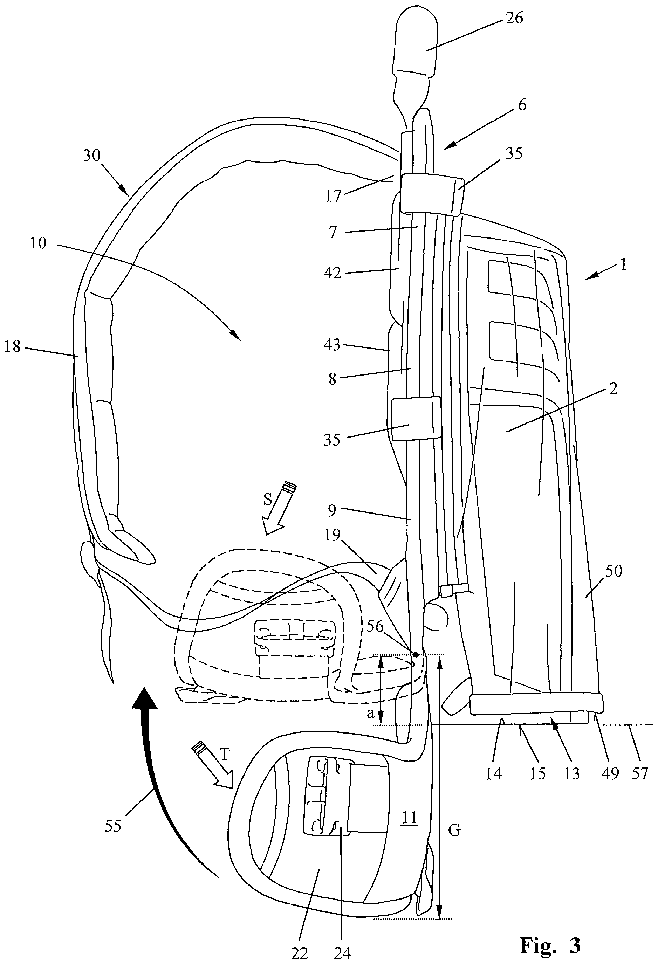

Wie Fig. 2 zeigt, hat das Systemmodul 1 eine Höhe H, die sich vom Schulterabschnitt 7 über den Mittelabschnitt 8 und den Rückenabschnitt 9 bis in den Hüftabschnitt 11 hinein erstreckt. Die Figuren 1 und 3 zeigen, dass der Schulterabschnitt 7 über das Systemmodul 1 nach oben übersteht; entsprechend ragt der Hüftabschnitt 11 über das untere Ende 13 des Systemmoduls 1 hinaus.

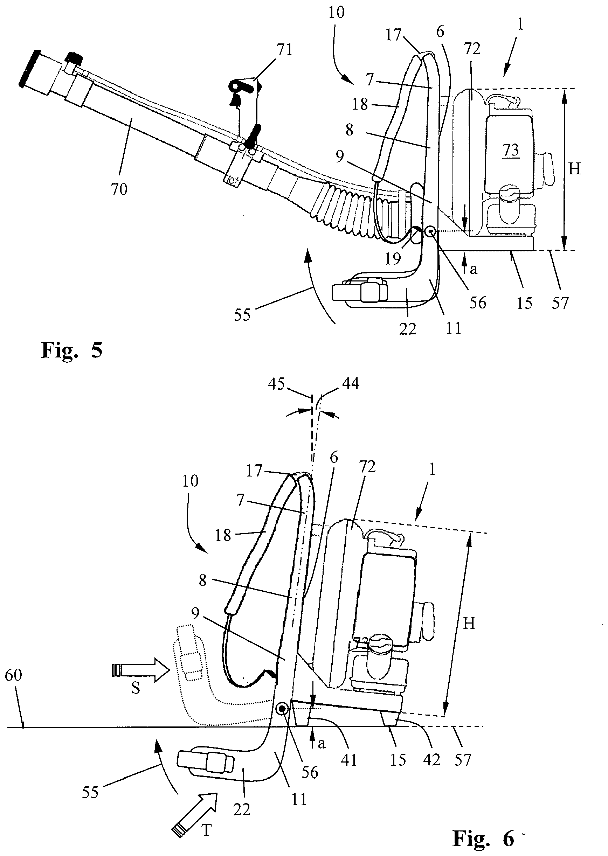

Das untere Ende 13 des Systemmoduls 1 kann derart gestaltet sein, dass das Systemmodul 1 eine äußere, vorzugsweise ebene Standfläche 15 ausbildet. Alternativ kann die Anbringung von Standfüßen 41, 42 vorteilhaft sein, wie z. B. in Fig. 6 gezeigt. Wie Fig. 2 zeigt, liegt die Bewegungsachse 56 im Bereich der Standfläche 15, zweckmäßig mit einem Abstand a oberhalb der Standfläche 15 des Systemmoduls 1. Die Bewegungsachse 56 liegt mit größerem Abstand zum Boden 60 als die Standfläche 15. Das Textilscharnier bzw. der Gewebeabschnitt 12 liegt zweckmäßig mit Abstand a oberhalb der Standfläche 15. Im gezeigten Ausführungsbeispiel ist die Standfläche 15 des Systemmoduls 1 am Boden 14 des Akkupackgehäuses 2 ausgebildet.

Die Breite R (Fig. 1) der Rückenplatte 6 ist geringfügig breiter als die Breite B des Systemmoduls 1, vorzugsweise 1 bis 5 cm breiter als die Breite B des Systemmoduls 1; die Höhe L (Fig. 2) der Rückenplatte 6 ist größer als die Höhe H des Systemmoduls 1; die Höhe L der Rückenplatte 6 ist etwa 30% bis 70% länger als die Höhe H des Systemmoduls 1.

Die Tragvorrichtung 10 für das rückengetragene Systemmodul 1 umfasst mindestens einen Schultergurt 16, 18, der mit seinem oberen Ende 17 im Bereich des oberen Schulterabschnittes 7 der Rückenplatte 6 festgelegt ist. Das untere Ende 19 des Schultergurtes 16, 18 ist im Bereich des unteren Rückenabschnitts 9 der Rückenplatte 6 befestigt. Im Ausführungsbeispiel sind zwei Schultergurte 16, 18 vorgesehen.

Die Schultergurte 16, 18 sind über einen Brustgurt 20 miteinander zu verbinden; der Brustgurt 20 verläuft quer von der Mitte des einen Schultergurtes 16 zum anderen Schultergurt 18 und ist über ein Schloss 21 zu öffnen und zu schließen.

Der Hüftabschnitt 11 der Rückenplatte 6 weist zwei seitliche Hüftflossen 22 auf, die in Höhe der Hüfte eines Benutzers über einen Verbindungsgurt 23 und ein Schloss 24 zu schließen sind.

Die Schultergurte 16, 18, der Brustgurt 20 und der Verbindungsgurt 23 weisen ferner an sich bekannte Stellmittel zur Längenanpassung der Gurte auf. Um das Systemmodul 1 zusammen mit der Tragvorrichtung 10 einfach von Hand tragen zu können, ist im oberen Bereich des Schulterabschnittes 7 eine Griffschlaufe 26 festgelegt. Im Bereich der Griffschlaufe 26 weist der obere Außenrand 30 der Rückenplatte 6 eine mittige Einschnürung 27 auf.

Wie die Figuren 1 bis 4 zeigen, ist das auf der Rückenplatte 6 befestigte Systemmodul 1 durch eine Abdeckhaube 50 abgedeckt. Die Abdeckhaube 50 übergreift das Systemmodul 1 im Wesentlichen über die gesamte Höhe H; lediglich das dem Rückenabschnitt 9 benachbarte Ende 49 der Abdeckhaube 50 ist offen.

Die Abdeckhaube 50 besteht aus einem wasserabweisenden, flexiblen Material und wird mit einem Rand 48 an der Rückenplatte 6 festgelegt. Im Ausführungsbeispiel ist ein lösbarer, wasserabweisender Verschluss 51 der Abdeckhaube 50 mit der Rückenplatte 6 gezeigt; zweckmäßig ist dieser Verschluss als Reißverschluss ausgebildet, insbesondere als wasserdichter Reißverschluss.

Wie vorstehend erläutert, weist das Systemmodul 1 eine Standfläche 15 auf, mit der das Systemmodul 1 auf einem Boden 60 (Fig. 5) abgestellt werden kann. Die Standfläche 15 ist so gestaltet, dass das Systemmodul 1 zusammen mit der Tragvorrichtung 10 auf dem Boden sicher aufrecht steht.

Die über den Rückenabschnitt 9 hinaus mit einem Hüftabschnitt 11 verlängerte Rückenplatte 6 ist so gestaltet, dass der Hüftabschnitt 11 zusammen mit seinen Seitenflossen 22 um die Bewegungsachse 56 in Pfeilrichtung 55 geschwenkt werden kann. Dabei bildet der Gewebeabschnitt 12 ein Textilscharnier und die Bewegungsachse 56, um die der Hüftabschnitt 11 relativ zum Rückenabschnitt 9 verschwenkbar ist.

Wie in den Figuren 2 und 3 gezeigt, liegt die Bewegungsachse 56 mit einem Abstand a oberhalb der Standfläche 15. Von hinten auf das Akkupackgehäuse 2 gesehen, wird die Bewegungsachse 56 vom Systemmodul 1 überdeckt.

Die Bewegungsachse 56 verläuft parallel zur Ebene 57 der Standfläche 15. Es ist ausreichend, wenn sich die Bewegungsachse 56 etwa auf der Höhe der Standfläche 15 des Systemmoduls 1 erstreckt.

Aus der Tragstellung T gemäß Fig. 2 lässt sich der Hüftabschnitt 11 in Pfeilrichtung 55 (Fig. 3) um die Bewegungsachse 56 in die Schwenkstellung S schwenken; entgegen der Pfeilrichtung 55 wird der Hüftabschnitt 11 in der Tragstellung T gegen das Systemmodul 1 abgestützt. Eine stabile Abstützung wird erreicht, wenn der Abstand a ausreichend groß gewählt ist; im gezeigten Ausführungsbeispiel beträgt der Abstand a etwa 10% bis 30% der Höhe G des Hüftabschnittes 11.

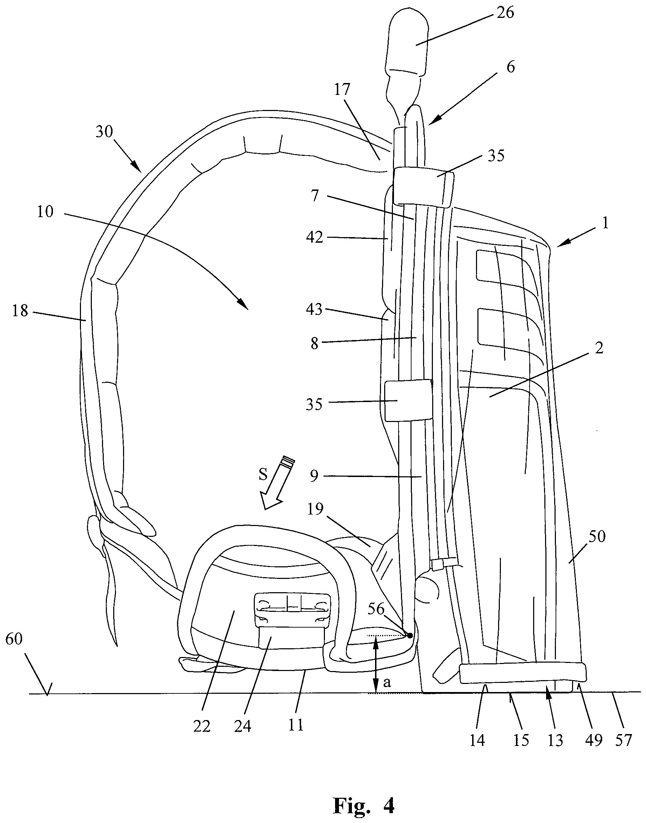

In Pfeilrichtung 55 kann der Hüftabschnitt 11 aus der Tragstellung T über die Ebene 57 der Standfläche 15 hinaus um etwa 90° in die Schwenkstellung S bewegt werden; in dieser Schwenkstellung S liegt - bedingt durch den Abstand a der Bewegungsachse 56 zur Standfläche 15 - der Hüftabschnitt 11 oberhalb der Ebene 57 der Standfläche 15. Dadurch kann - wie Fig. 4 zeigt - das Systemmodul 1 zusammen mit der Tragvorrichtung 10 ohne Beeinträchtigung durch den Hüftabschnitt 11 sicher auf dem Boden 60 abgestellt werden. Aufgrund des Abstandes a der Bewegungsachse 56 zur Standfläche 15 ist ferner gewährleistet, dass der in die Schwenkstellung S schwenkbare Hüftabschnitt 11 in Schwenkstellung S mit Abstand zum Boden 60 liegt. Ein sicherer aufrechter Stand des Systemmoduls 1 zusammen mit der Tragvorrichtung 10 auf dem Boden 60 ist gewährleistet.

Im Ausführungsbeispiel nach Fig. 5 ist als Systemmodul 1 ein Blasgerät gezeigt, bestehend aus einer Gebläsespirale 72 und einer Antriebseinheit 73. An die Gebläsespirale 72 ist ein Blasrohr 70 angeschlossen, welches vom Benutzer über einen Bediengriff 71 geführt und gehalten wird. Wie vorstehend am Beispiel eines Akkupacks als Systemmodul 1 beschrieben, ist eine Tragvorrichtung 10 mit dem Systemmodul 1 verbunden, die im Wesentlichen aus einer Rückenplatte 6 besteht. Die Rückenplatte 6 setzt sich, wie auch zum Ausführungsbeispiel nach den Figuren 1 bis 4 beschrieben, aus einem Schulterabschnitt 7, einem Mittelabschnitt 8 und einem Rückenabschnitt 9 zusammen, wobei die Rückenplatte 6 über den Rückenabschnitt 9 hinaus mit einem Hüftabschnitt 11 verlängert ist.

Der Hüftabschnitt 11 ist über ein Gelenk mit einer Bewegungsachse 56 angebunden, wbei die Bewegungsachse 56 etwa parallel zur Standfläche 15 des Systemmoduls 1 liegt. Zur Standfläche 15 hat die Bewegungsachse 56 einen Abstand a, wie vorstehend anhand der Fig. 1 bis 4 bereits eingehend erläutert. Die abklappbare Funktion des Hüftabschnitts 11 entspricht der vorstehenden Beschreibung zu den Fig. 1 bis 4.

Das Ausführungsbeispiel eines Systemmoduls 1 nach Fig. 6 entspricht dem Systemmodul 1 nach Fig. 5, weshalb für gleiche Teile gleiche Bezugszeichen verwendet sind. Das Systemmodul 1 nach Fig. 6 weist eine Standfläche 15 zum Abstellen des Systemmoduls 1 auf dem Boden 60 auf. Die Standfläche 15 wird durch Standfüße 41, 42 gebildet, die am Boden des Systemmoduls befestigt sein können und deren Aufstandsflächen auf den Boden 60 die Ebene 57 der Standfläche 15 bestimmen. Dadurch kann das Systemmodul 1 unter einem Winkel 44 zur Vertikalen 45 auf den Boden 60 abgestellt werden, was das Wiederaufnehmen des Systemmoduls 1 durch einen Benutzer erleichtern kann.

## Patentansprüche

1. Rückengetragenes Systemmodul (1) für ein Arbeitswerkzeug, wobei das Systemmodul (1) eine Standfläche (15) zum aufrechten Abstellen des Systemmoduls (1) aufweist, und mit einer Tragvorrichtung (10) für das Systemmodul (1) aus zumindest einer Rückenplatte (6) und mindestens einem Schultergurt (16, 18), wobei die Rückenplatte (6) mit einem oberen Schulterabschnitt (7) und mit einem unteren Rückenabschnitt (9) ausgebildet ist, und ein Schultergurt (16, 18) mit einem oberen Ende (17) im oberen Schulterabschnitt (7) der Rückenplatte (6) und mit einem unteren Ende (19) im Bereich des unteren Rückenabschnitts (9) der Rückenplatte (6) festgelegt ist,
**dadurch gekennzeichnet, dass** die Rückenplatte (6) über den Rückenabschnitt (9) hinaus als Verlängerung einen Hüftabschnitt (11) aufweist, dass der Hüftabschnitt (11) um eine Bewegungsachse (56) relativ zum Rückenabschnitt (9) schwenkbar ist, und dass sich die Bewegungsachse (56) im Bereich der Standfläche (15) des Systemmoduls (1) erstreckt, und der Hüftabschnitt (11) um die Bewegungsachse (56) über die Standfläche (15) hinaus verschwenkbar ist.

2. Rückengetragenes Systemmodul (1) nach Anspruch 1, **dadurch gekennzeichnet, dass** sich die Bewegungsachse (56) parallel zur Ebene (57) der Standfläche (15) erstreckt.

3. Rückengetragenes Systemmodul (1) nach Anspruch 1,
**dadurch gekennzeichnet, dass** die Bewegungsachse (56) vom Systemmodul (1) überdeckt ist.

4. Rückengetragenes Systemmodul (1) nach Anspruch 1, **dadurch gekennzeichnet, dass** in einer Tragstellung (T) der Hüftabschnitt (11) über die Standfläche (15) des Systemmoduls (1) hinausragt und der Hüftabschnitt (11) in einer Schwenkstellung (S) oberhalb der Standfläche (15) des Systemmoduls (1) liegt.

5. Rückengetragenes Systemmodul (1) nach Anspruch 1, **dadurch gekennzeichnet, dass** die Bewegungsachse (56) durch ein elastisches Gewebe (12) gebildet ist.

6. Rückengetragenes Systemmodul (1) nach Anspruch 1, **dadurch gekennzeichnet, dass** der Hüftabschnitt (11) mit einem Hüftgurt (23) zu schließen ist.

7. Rückengetragenes Systemmodul (1) nach Anspruch 1, **dadurch gekennzeichnet, dass** auf der Rückenplatte (6) eine Abdeckhaube (50) befestigt ist, die das Systemmodul (1) aufnimmt.

8. Rückengetragenes Systemmodul (1) nach Anspruch 7, **dadurch gekennzeichnet, dass** die Abdeckhaube (50) am unteren, dem Hüftabschnitt (11) benachbarten Ende (49) offen ist.

9. Rückengetragenes Systemmodul (1) nach Anspruch 7, **dadurch gekennzeichnet, dass** die Abdeckhaube (50) aus einem wasserabweisenden, flexiblen Material besteht.

10. Rückengetragenes Systemmodul (1) nach Anspruch 7, **dadurch gekennzeichnet, dass** die Abdeckhaube (50) über einen lösbaren, wasserabweisenden Verschluss (51) an der Rückenplatte (6) befestigt ist.

## Claims

1. Back-pack system module (1) for a work tool, such that the system module (1) has a standing surface (15) for putting the system module (1) down in an upright position, and with a carrying device (10) for the system module (1) consisting of at least one back-plate (6) and at least one shoulder strap (16, 18), wherein the back-plate (6) has an upper shoulder section (7) and a lower back section (9), and a shoulder strap (16, 18) is attached at an upper end (17) to the upper shoulder section (7) of the back-plate (6) and at a lower end (19) in the area of the lower section back section (9) of the back-plate,
**characterised in that** the back-plate (6) has a hip section (11) extending beyond the back section (9), the said hip section (11) can pivot about a movement axis (56) relative to the back section (9), the movement axis (56) extends in the area of the standing surface (15) of the system module (1), and the hip section (11) can pivot outwards about the movement axis (56) beyond the standing surface (15).

2. Back-pack system module (1) according to Claim 1,
**characterised in that** the movement axis (56) extends parallel to the plane (57) of the standing surface (15).

3. Back-pack system module (1) according to Claim 1,
**characterised in that** the movement axis (56) is covered by the system module (1).

4. Back-pack system module (1) according to Claim 1,
**characterised in that** in a carrying position (T) the hip section (11) projects outwards over the standing surface (15) of the system module (1) and the hip section (11) rests in a pivoted position (S) above the standing surface (15) of the system module (1).

5. Back-pack system module (1) according to Claim 1,
**characterised in that** the movement axis (56) is formed by an elastic fabric (12).

6. Back-pack system module (1) according to Claim 1,
**characterised in that** the hip section (11) is secured by a hip belt (23).

7. Back-pack system module (1) according to Claim 1,
**characterised in that** a covering hood (50) is fixed to the back-plate (6), which envelops the system module (1).

8. Back-pack system module (1) according to Claim 7,
**characterised in that** at its lower end near the hip section (11) the covering hood (50) is open.

9. Back-pack system module (1) according to Claim 7,
**characterised in that** the covering hood (50) is made of a water-repellent, flexible material.

10. Back-pack system module (1) according to Claim 7,
**characterised in that** the covering hood (50) is attached to the back-plate (6) by means of a detachable, water-repellent closure (51).

## Revendications

1. Système modulaire (1) porté sur le dos pour un outil de travail, dans lequel le système modulaire (1) présente une surface d'appui (15) pour la pose verticale du système modulaire (1), et avec un dispositif de support (10) pour le système modulaire (1) formé d'au moins une plaque de dos (6) et d'au moins une sangle d'épaule (16, 18), dans lequel la plaque de dos (6) est réalisée avec une section d'épaule supérieure (7) et une section de dos inférieure (9), et une sangle d'épaule (16, 18) est fixée avec une extrémité supérieure (17) dans la section d'épaule supérieure (7) de la plaque de dos (6) et avec une extrémité inférieure (19) dans la zone de la section de dos inférieure (9) de la plaque de dos (6), **caractérisé en ce que** la plaque de dos (6) présente une section de ceinture (11) en tant que prolongement au-delà de la section de dos (9), que la section de ceinture (11) est pivotante autour d'un axe de déplacement (56) par rapport à la section de dos (9), et que l'axe de déplacement (56) s'étend dans la zone de la surface d'appui (15) du système modulaire (1), et la section de ceinture (11) peut pivoter autour de l'axe de déplacement (56) au-delà de la surface d'appui (15).

2. Système modulaire (1) porté sur le dos selon la revendication 1,
**caractérisé en ce que** l'axe de déplacement (56) s'étend parallèlement au plan (57) de la surface d'appui (15).

3. Système modulaire (1) porté sur le dos selon la revendication 1,
**caractérisé en ce que** l'axe de déplacement (56) est recouvert par le système modulaire (1).

4. Système modulaire (1) porté sur le dos selon la revendication 1,
**caractérisé en ce que** dans une position de support (T), la section de ceinture (11) dépasse de la surface d'appui (15) du système modulaire (1) et la section de ceinture (11) se trouve dans une position de pivotement (S) au-dessus de la surface d'appui (15) du système modulaire (1).

5. Système modulaire (1) porté sur le dos selon la revendication 1,
**caractérisé en ce que** l'axe de déplacement (56) est formé par un tissu élastique (12).

6. Système modulaire (1) porté sur le dos selon la revendication 1,
**caractérisé en ce que** la section de ceinture (11) doit être fermée avec une sangle de ceinture (23).

7. Système modulaire (1) porté sur le dos selon la revendication 1,
**caractérisé en ce qu'**une coiffe de recouvrement (50) qui reçoit le système modulaire (1), est fixée sur la plaque de dos (6).

8. Système modulaire (1) porté sur le dos selon la revendication 7,
**caractérisé en ce que** la coiffe de recouvrement (50) est ouverte au niveau de l'extrémité (49) inférieure adjacente à la section de ceinture (11).

9. Système modulaire (1) porté sur le dos selon la revendication 7,
**caractérisé en ce que** la coiffe de recouvrement (50) se compose d'un matériau souple, hydrophobe.

10. Système modulaire (1) porté sur le dos selon la revendication 7,
**caractérisé en ce que** la coiffe de recouvrement (50) est fixée à la plaque de dos (6) par le biais d'une fermeture (51) hydrophobe, amovible.
